# FASCICULE DE BREVET EUROPEEN

(11) **EP 2 096 030 B1**
(45) Date de publication et mention de la délivrance du brevet: **14.08.2013**
(21) Numéro de dépôt: 09002421.7
(22) Date de dépôt: 20.02.2009
(51) Int. Cl.: B64C 27/605

(54) **Hélicoptère muni d'une plurarité d' élèments sustentateurs pourvu d' un volet pour commander l' incidence de ses pales**
Hubschrauber, der mit einer Vielzahl von Auftriebselementen ausgestattet ist und über eine Klappe zur Steuerung des Einfallwinkels seiner Blätter verfügt
Helicopter equipped with a plurality of lifting elements equipped with a flap for controlling the angle of attack of its blades

(30) Priorité: 27.02.2008 FR 0801077
(43) Date de publication de la demande: 02.09.2009
(73) Titulaire: EUROCOPTER, 13725 Marignane (FR)
(72) Inventeur: Brindejonc, Anne, 13700 Marignane (FR)
(74) Mandataire: GPI & Associés

(56) Documents cités:
- DE-A1- 2 409 227
- GB-A- 735 571
- US-A- 2 481 750
- US-A- 2 534 353
- US-A- 2 818 123

## Description

La présente invention concerne un hélicoptère muni d'une pluralité d'éléments sustentateurs pour commander l'incidence aérodynamique de ses pales. Par suite, cette invention se situe dans le domaine technique restreint des commandes de pas de pales d'hélicoptère.

En effet, un hélicoptère comporte communément un rotor principal de sustentation et de propulsion pourvu d'une pluralité de pales.

Les pales du rotor principal décrivent un cône très ouvert, dénommé « cône rotor » par l'homme du métier, dont le plan de rotation est perpendiculaire à la portance générale générée par ce rotor principal, Cette portance générale du rotor principal peut alors être décomposée en une force verticale de sustentation et une force horizontale qui assure la translation de l'hélicoptère.

Par suite, le rotor principal assure bien la sustentation et la propulsion de l'hélicoptère.

De plus, en contrôlant la forme et l'inclinaison du cône rotor par rapport au référentiel hélicoptère, un pilote peut diriger précisément l'hélicoptère.

Afin d'agir sur ce cône rotor, on tend à faire battre les pales de façon à modifier leur inclinaison par rapport au plan d'entraînement du rotor, ce plan d'entraînement étant perpendiculaire au mât du rotor.

Par suite, l'hélicoptère est pourvu de moyens spécifiques destinés à faire varier le pas de chaque pale, et par conséquent l'incidence aérodynamique de chaque pale par rapport au flux d'air incident traversé par la pale.

En faisant varier le pas d'une pale, on modifie la portance qu'elle génère ce qui a pour conséquence le battement de la pale.

Afin de contrôler la portance générale du rotor, en Intensité et en direction, le pilote de l'hélicoptère agit donc généralement sur la valeur de l'angle de pas de chaque pale en commandant une rotation de la pale autour de son axe longitudinal de pas.

Ainsi, lorsque le pilote ordonne une variation collective de pas, c'est à dire une variation identique du pas de toutes les pales, ce pilote fait varier l'intensité de la portance générale du rotor principale de manière à contrôler l'altitude et la vitesse de l'hélicoptère.

A contrario, une variation de pas collectif est sans effet sur la direction de cette portance générale.

En effet, pour modifier la direction de la portance générale générée par le rotor, il convient d'incliner le cône rotor en réalisant une variation non pas collective mais cyclique de pas. Dans ce cas de figure, le pas d'une pale varie en fonction de son azimut et passe durant un tour complet d'une valeur maximale à une valeur minimale obtenues dans des azimuts opposés.

La variation cyclique du pas des pales est à l'origine d'une variation cyclique de la portance des pales et donc de l'inclinaison du cône rotor. En commandant la variation cyclique du pas des pales, le pilote contrôle l'assiette de l'aéronef et sa translation.

On connaît par le document US 2 534 353 un premier dispositif pour contrôler le pas des pales d'un hélicoptère.

Selon ce document, un rotor d'hélicoptère est muni de deux pales solidaires chacune d'un manchon fixé à un moyeu,

Le pilote commande le pas collectif des pales à l'aide d'un levier agissant sur une tige logée à l'intérieur du mât rotor. Cette tige répercute son mouvement sur une première et une deuxième bielles fixées au moyeu. En manoeuvrant le levier de commande de pas collectif, le pilote entraîne une translation de ladite tige ce qui génère une rotation du moyeu et donc des pales autour d'un axe de variation de pas.

Par ailleurs, le moyeu est solidarisé à un premier et un deuxième éléments sustentateurs agencés dans le plan des pales via un premier et deuxième arbres de liaison rigidement liés entre eux, l'axe longitudinal des éléments sustentateurs étant perpendiculaire aux axes longitudinaux des pales. Ces éléments sustentateurs sont dénommés « palette » par l'homme du métier.

Chaque arbre de liaison est en outre relié à un plateau de commande, dénommé plateau cyclique, via un compas. Plus précisément, le plateau cyclique comportant un plateau tournant et un plateau non tournant, les compas sont fixés sur le plateau tournant du plateau cyclique.

En outre, le plateau non tournant comporte une barre dont le pilote peut se saisir.

Pour contrôler le pas cyclique des pales, le pilote manoeuvre la barre pour incliner le plateau non tournant, et par suite le plateau tournant. L'inclinaison du plateau tournant est alors répercutée sur les premier et deuxième arbres de liaison via les compas ce qui permet de modifier le pas des éléments sustentateurs.

La portance générée par ces éléments sustentateurs varie donc ce qui entraine un battement de ces derniers et par voie de conséquence un basculement du moyeu.

Le moyeu s'inclinant, les deux pales verront leur propre pas modifié.

Ce premier dispositif est relativement simple mals impose la présence d'un plateau cyclique pénalisant d'un point de vue masse et aérodynamisme.

De plus, il implique la présence de deux sous-ensembles pour respectivement commander la variation collective de pas et la variation cyclique du pas des pales ce qui induit des masses importantes et augmente les risques de panne.

Enfin, les éléments sustentateurs sont censés faire varier cycliquement le pas des pales. Toutefois, ce n'est pas réellement le cas, du moins au sens strict, dans la mesure où les deux éléments sustentateurs agissent conjointement sur le moyeu et donc sur les deux pales de façon simultanée et identique.

En outre, on constate que les efforts à fournir par le pilote pour incliner les éléments sustentateurs, en agissant sur la barre du plateau non tournant sont parfois extrêmement importants.

Pour remédier à ce dernier inconvénient, on connaît un deuxième dispositif par le document US 2 818 123.

Désormais, les éléments sustentateurs sont chacun équipés d'un volet. Les compas agencés sur le plateau tournant n'entrainent pas la variation de pas des éléments sustentateurs mais l'inclinaison des volets par rapport à ces éléments sustenteurs.

En faisant varier l'inclinaison du volet, on modifie la portance de l'ensemble élément sustentateur/ volet et par suite le pas des pales.

L'effort à exercer par le pilote pour faire varier le pas des pales est alors amoindri par rapport au premier dispositif dans la mesure où la surface portante du volet est faible comparée à la surface portante de l'élément sustentateur.

Néanmoins, les inconvénients mentionnés précédemment demeurent. De plus, ces premier et deuxième dispositifs ne sont pas à priori applicables sur un hélicoptère comportant plus deux pales dans la mesure où le moyeu ne peut tourner autour d'un unique axe durant la variation cyclique de pas.

On connaît, par le document DE 2409227, un autre dispositif muni de deux éléments sustentateurs solidarisés aux extrémités d'un barreau traversant la tête d'un rotor.

En outre, le rotor comportant deux pales, le barreau est lié à la première pale via un premier levier et à la deuxième pale via un deuxième levier.

Par suite, chaque élément sustentateur est lié mécaniquement et fonctionnellement auxdites deux pales de manière à faire varier le pas de ces pales via le barreau.

Par ailleurs, on connaît un troisième dispositif agencé sur les hélicoptères modernes.

Les commandes de pas, collectif et cyclique, du pilote sont reliées à trois servocommandes, via des bielles et des combinateurs ou encore des commandes électriques, solidarisées au plateau non tournant d'un plateau cyclique.

De plus, le plateau cyclique est lié mécaniquement à chaque pale par une bielle de commande de pas.

Lorsque le pilote souhaite modifier le pas collectif des pales, il agit sur une commande qui ordonne aux trois servocommandes de faire monter ou descendre l'ensemble du plateau cyclique, à savoir ces plateaux non tournant et tournant.

Les bielles de commande de pas sont alors toutes déplacées de la même distance ce qui implique que le pas de toutes les pales varie du même angle.

A contrario, pour faire varier le pas cyclique des pales afin de diriger l'hélicoptère dans une direction donnée, le pilote ordonne le déplacement d'une unique servocommande par exemple.

Le plateau cyclique ne se déplace pas verticalement mais s'incline alors par rapport au mât du rotor. Chaque bielle de commande de pas se déplace selon une direction et une valeur qui lui est propre et il en va de même pour le pas de la pale associée.

La commande de pas est d'une certaine manière Individualisée, contrairement au premier et deuxième dispositifs, puisque chaque pale est commandée par sa propre bielle de commande de pas.

Ce troisième dispositif est très efficace ce qui explique sa généralisation. Néanmoins, les efforts à fournir pour manoeuvrer les pales étant importants, particulièrement sur les hélicoptères de fort tonnage, les servocommandes et le plateau cyclique ont des masses et des dimensions importantes ce qui est très pénalisant.

De plus, leur présence tend à créer des perturbations aérodynamiques.

La présente invention a pour alors objet de proposer un hélicoptère permettant de s'affranchir des limitations mentionnées ci-dessus.

Ainsi, l'invention vise à obtenir un dispositif et un procédé de changement de pas des pales du rotor principal d'un l'hélicoptère qui soit à la fois léger et efficace en autorisant un parfait contrôle des pas collectif et cyclique des pales, quel que soit le nombre de pales du rotor.

Selon l'invention, un procédé pour faire varier le pas d'une pale d'un rotor d'hélicoptère comportant au moins deux pales est remarquable en ce que, un élément sustentateur pourvu d'un volet au niveau de son bord de fuite étant uniquement lié à ladite pale, on ajuste la portance générée par l'élément sustentateur en inclinant le volet par rapport à l'élément sustentateur afin que cet élément sustentateur batte pour entraîner en rotation la pale à laquelle il est lié autour d'un premier axe longitudinal de variation de pas de cette pale.

En effet, en inclinant le volet, un pilote modifie nécessairement la portance de l'ensemble volet/ élément sustentateur.

Chaque élément sustentateur est alors géré de manière indépendante, fonctionnellement et mécaniquement, de manière à faire varier individuellement le pas d'une unique pale.

Selon un premier mode de réalisation, la variation de la portance de l'ensemble volet/ élément sustentateur induit un battement de cet ensemble volet/ élément sustentateur et par suite une rotation de la pale associée autour de son premier axe longitudinal de variation de pas.

Ainsi, le braquage du volet provoque une variation directe de la portance globale de l'ensemble volet/ élément sustentateur par modification de la courbure générale de son profil.

Selon un deuxième mode de réalisation, l'inclinaison du volet provoque une rotation de l'élément sustentateur autour de son deuxième axe longitudinal de variation de pas. La variation de pas de l'élément sustentateur induit une variation de sa portance. L'élément sustentateur bat et entraîne en rotation la pale associée autour de son premier axe longitudinal de variation de pas.

Contrairement au premier mode de réalisation, le braquage du volet génère une variation de moment de l'élément sustentateur. L'incidence de cet élément sustentateur se met alors à varier ce qui entraîne une variation de la portance de l'élément sustentateur.

On remarquera que selon les premier et deuxième dispositifs de l'art antérieur utilisant deux éléments sustentateurs, les deux éléments sustentateurs agissent conjointement sur le moyeu du rotor qui entraine en rotation les deux pales. A contrario, selon le procédé de l'invention, on modifie la portance d'un élément sustentateur qui agit directement sur une unique pale.

L'invention a aussi pour objet l'hélicoptère mettant en oeuvre le procédé revendiqué.

Selon l'invention, un hélicoptère est muni d'un rotor principal comportant au moins deux pales, chaque pale étant pourvue d'un moyen de fixation à un moyeu du rotor. On note que le moyen de fixation de la pale au moyeu peut consister en un manchon solidarisée par des moyens usuels ou encore en un manchon faisant partie intégrante de la pale par exemple.

Cet hélicoptère est remarquable en ce qu'il est muni d'un élément sustentateur par pale, chaque élément sustentateur étant pourvu d'un volet. De plus, chaque élément sustentateur est lié mécaniquement à une unique pale, c'est-à-dire à l'unique pale correspondante à laquelle l'élément sustentateur est associé, pour faire varier le pas de ladite unique paie à laquelle l'élément sustentateur est lié.

Chaque élément sustentateur étant lié mécaniquement à une pale, chaque élément sustentateur est avantageusement solidaire en rotation de la pale à, laquelle il est mécaniquement lié autour d'un premier axe longitudinal de variation de pas de la pale.

Par suite, quel que soit le mode de réalisation, une inclinaison du volet provoque le battement de l'élément sustentateur associé qui entraîne en rotation une pale autour de son premier axe longitudinal de variation de pas via sa liaison mécanique.

L'élément sustentateur commande donc de manière directe le pas de la pale, et non pas via le moyeu du rotor par exemple.

En outre, le pas de chaque pale est donc commandé par un élément sustentateur lié à l'ancrage de la pale. Contrairement aux premier et deuxième dispositifs de l'art antérieur, chaque pale est donc bien commandée par son propre élément sustentateur.

De plus, le système est opérationnel indépendamment du nombre de pales dans la mesure où les éléments sustentateurs ne doivent pas obligatoirement présenter une angulation de 90° avec les pales ou se situer dans le même plan que les pales, L'invention est applicable sur un hélicoptère comportant au moins deux pales et non pas uniquement deux pales ce qui constitue un avantage certain.

Par rapport au troisième dispositif de l'art antérieur, il est plus aisé de mouvoir un élément sustentateur de faibles dimensions plutôt qu'une pale relativement grande. De plus, l'effet aérodynamique généré par l'élément sustentateur permet de limiter les efforts à exercer.

Par ailleurs, l'invention peut comporter une ou plusieurs des caractéristiques additionnelles suivantes.

Pour faire varier le pas collectif, on agit sur l'ensemble des éléments sustentateurs pour que ces éléments sustentateurs battent de manière identique, alors que pour faire varier le pas cycliquement, on individualise les actions.

Par conséquent, il est avantageux que chaque élément sustentateur soit lié mécaniquement à l'unique pale correspondante par une liaison mécanique indépendante du moyeu du rotor, la liaison mécanique liant avantageusement l'élément sustentateur au moyen de fixation de la pale.

Ainsi, la liaison mécanique n'englobe pas le moyeu du rotor, contrairement aux premier et deuxième dispositifs de l'art antérieur pour lesquels chaque élément sustentateur est mécaniquement lié au moyeu et entraine le basculement de ce moyeu.

Plus précisément, selon le premier mode de réalisation, chaque élément sustentateur étant lié mécaniquement à une unique pale correspondante par une liaison mécanique, cette liaison mécanique comporte éventuellement une première extrémité solidarisée à la zone d'attache de la pale, c'est-à-dire soit au moyen de fixation de la pale au moyeu soit au pied de la pale elle-même l'élément sustentateur étant solidarisé à une deuxième extrémité de la liaison mécanique afin que l'élément sustentateur et la liaison mécanique soient solidaires en rotation autour d'un axe de battement de cet élément sustentateur.

L'élément sustenteur a donc un ou deux degrés de liberté de manière d'une part à pouvoir battre autour de son axe de battement et, d'autre part, éventuellement se déplacer sous l'effet de la trainée. Cet élément sustentateur étant solidaire de la liaison mécanique, par exemple via une attache d'un premier type à un ou deux degrés de liberté, l'inclinaison du volet provoque directement le battement de cet élément sustentateur et par suite la rotation de la pale.

Selon le deuxième mode de réalisation, chaque élément sustentateur étant lié mécaniquement à une unique pale par une liaison mécanique, la liaison mécanique comporte une première extrémité solidarisée à la zone d'attache de la pale, l'élément sustentateur étant solidarisé en rotation autour de l'axe de battement dudit élément sustentateur à une deuxième extrémité de la liaison mécanique correspondante via une articulation de pas permettant à l'élément sustentateur d'effectuer un mouvement rotatif autour d'un deuxième axe longitudinal de variation de pas de l'élément sustentateur.

L'élément sustenteur a dans ce cas deux ou trois degrés de liberté de manière à pouvoir battre autour de son axe de battement et à faire effectuer un mouvement rotatif pour faire le pas de cet élément sustentateur, De plus, l'articulation de pas autorise éventuellement un déplacement optionnel sous l'effet de la trainée.

L'inclinaison du volet induit donc un changement de pas de l'élément sustentateur puis son battement, et par conséquent la rotation de la pale correspondante.

Quel que soit le mode de réalisation, les efforts à appliquer pour mettre en rotation un élément sustentateur de faibles dimensions autour de son deuxième axe longitudinal sont nettement inférieurs aux efforts nécessaires pour mettre en rotation une pale autour de son premier axe longitudinal de variation de pas, en appliquant les techniques mises en oeuvre par le troisième dispositif de l'art antérieur par exemple.

Par conséquent, il devient possible de simplifier le système de changement de pas des pales. Malgré le surpoids provenant des éléments sustentateurs et de leurs liaisons mécaniques, l'invention reste étonnamment avantageuse par rapport au troisième dispositif connu.

Selon une première et une deuxième variante de ces modes de réalisation la liaison mécanique est une cornière.

Ainsi, conformément au premier mode de réalisation, la première zone extrémale de la cornière, et donc à la première extrémité de la liaison mécanique, est liée rigidement à la zone d'attache de la pale.

De plus, l'élément sustentateur est solidarisé à une deuxième zone extrémale de la cornière, à savoir la deuxième extrémité de la liaison mécanique, afin que l'élément sustentateur et la liaison mécanique soit solidaires en rotation autour d'un axe de battement de cet élément sustentateur. Le pied de l'élément sustentateur traverse alors un orifice de cette deuxième zone extrémale.

Conformément au deuxième mode de réalisation, la première zone extrémale de la cornière est rigidement liée à la zone d'attache de la pale. En revanche, l'élément sustentateur est solidarisé par une articulation de pas à une deuxième zone extrémale de la cornière, à savoir la deuxième extrémité de la liaison mécanique, afin que l'élément sustentateur et la liaison mécanique soient solidaires en rotation autour d'un axe de battement de cet élément sustentateur, ladite articulation de pas permettant à l'élément sustentateur d'effectuer un mouvement rotatif autour d'un deuxième axe longitudinal de variation de pas de l'élément sustentateur.

Avantageusement, l'articulation de pas comporte un moyen de soutien et une attache d'un deuxième type à deux ou trois degrés de liberté, le moyen de soutien étant fixé rigidement au pied de l'élément sustentateur et à l'attache d'un deuxième type à deux ou trois degrés de liberté.

De plus, selon la première variante de l'agencement des éléments sustentateurs, les pales étant contenues dans un premier plan lorsqu'elles ne battent pas, les éléments sustentateurs liés mécaniquement auxdites pales étant contenus dans un deuxième plan lorsqu'ils ne battent pas, les premier et deuxième plans sont confondus.

A contrario, selon une deuxième variante de l'agencement des éléments sustentateurs, les premier et deuxième plans sont parallèles entre eux, un plan se trouvant au dessus de l'autre.

La deuxième variante consiste à décaler faiblement, de l'ordre de grandeur de l'épaisseur de l'élément sustentateur, les premier et deuxième plans, en inclinant la cornière liant l'élément sustentateur à la zone d'attache de la pale correspondante, dans le but d'annuler les effets de la pesanteur sur les éléments sustentateurs.

En effet, le poids des éléments sustentateurs tend à les faire battre dans la direction de la pesanteur. Ce battement est à même d'entraîner une rotation des pales qui n'aurait pas été requise par le pilote.

Or, de manière surprenante, lorsque le deuxième plan est légèrement situé sous le premier plan, en étant décalé d'une faible distance de l'ordre de l'épaisseur de l'élément sustentateur, on constate que les efforts centrifuges, exercés sur les éléments sustentateurs lorsque le rotor tourne, redressent ces éléments sustentateurs de manière à contrecarrer l'influence néfaste de leur poids.

Selon une troisième variante, on décale sensiblement, de l'ordre de grandeur de la corde des éléments sustentateurs, les premier et deuxième plans à l'aide d'une biellette intermédiaire pour étendre l'application de l'invention à un rotor possédant n'importe quel nombre de pales, De plus, cette troisième variante permet d'optimiser les caractéristiques aérodynamiques du rotor.

La liaison mécanique comporte alors une cornière articulée à une biellette intermédiaire. La première extrémité de la liaison mécanique correspond donc à la première zone extrémale de la cornière, c'est-à-dire l'extrémité de la cornière qui n'est pas liée à la biellette intermédiaire. De même, la deuxième extrémité de la liaison mécanique est représentée par l'extrémité libre de la biellette intermédiaire, c'est-à-dire l'extrémité de la biellette intermédiaire qui n'est pas liée à la cornière.

Suivant le mode de réalisation, l'extrémité libre de la bielle principale est reliée soit directement au pied de l'élément sustentateur, soit à l'articulation de pas de cet élément sustentateur.

Quelle que soit la variante, il est alors possible de fixer rigidement l'élément sustentateur à la deuxième extrémité de la liaison mécanique, de façon directe ou via son articulation de pas suivant le mode de réalisation.

Selon une configuration allégée, chaque élément sustentateur est uniquement soutenu par sa liaison mécanique.

Cependant, il est avantageux de soutenir chaque élément sustentateur par un autre biais.

Selon une configuration renforcée du premier mode de réalisation, le pied de l'élément sustentateur traverse la deuxième extrémité de la liaison mécanique pour être fixé à une unité tournante, c'est-à-dire au mât ou au moyeu du rotor voire au moyen de fixation de la pale à ce moyeu du rotor, via une attache d'un premier type à un ou deux degrés de liberté.

De plus, on note que l' attache d'un premier type à un ou deux degrés de liberté est dimensionnée pour minimiser la distance séparant l'axe de battement de l'élément sustentateur au premier axe longitudinal de variation de pas de la pale correspondante afin que ledit axe de battement et ledit premier axe longitudinal soient sensiblement confondus.

Selon la première variante et éventuellement selon la deuxième variante de ce premier mode de réalisation renforcé, l'attache d'un premier type à un ou deux degrés de liberté sera donc fixée au moyeu du rotor alors que selon la troisième variante elle sera fixée au mât du rotor, ou à un organe prolongeant ledit mât.

Selon une configuration renforcée du deuxième mode de réalisation, l'articulation de pas de chaque élément sustentateur est pourvue d'un moyen de soutien et d'une attache d'un deuxième type à deux ou trois degrés de liberté. Le moyen de soutien est solidarisé à l'élément sustentateur correspondant, l'attache d'un deuxième type à deux ou trois degrés de liberté étant fixée à une unité tournante comportant le mât du rotor et son moyeu ainsi que le moyen d'attache de la pale au moyeu.

Le moyen de soutien traverse alors la deuxième extrémité de la liaison mécanique de manière à permettre à l'élément sustentateur d'effectuer un mouvement rotatif autour de son deuxième axe longitudinal de variation de pas et d'entraîner en rotation la liaison mécanique autour de son axe de battement.

De plus, on note que l'attache d'un deuxième type à deux ou trois degrés de liberté, une butée sphérique par exemple, est dimensionnée pour minimiser la distance séparant l'axe de battement de l'élément sustentateur au premier axe longitudinal de variation de pas de la pale correspondante afin que ledit axe de battement et ledit premier axe longitudinal soient sensiblement confondus.

Selon la première variante et éventuellement selon la deuxième variante de ce deuxième mode de réalisation, l'attache d'un deuxième type à deux ou trois degrés de liberté sera donc fixée au moyeu du rotor alors que selon la troisième variante elle sera fixée au mât du rotor, ou à un organe prolongeant ledit mât.

Par conséquent, les configurations allégées suivantes sont envisageables :
- le pied de chaque élément sustentateur est fixé à la deuxième extrémité de la liaison mécanique, directement ou via l'attache d'un deuxième type à deux ou trois degrés de liberté d'une articulation de pas, le premier plan contenant les pales lorsqu'elles ne battent pas étant confondu avec le deuxième plan contenant les éléments sustentateurs lorsqu'ils ne battent pas,
- la liaison mécanique comportant une cornière, le pied de chaque élément sustentateur est fixé à la deuxième zone extrémale de la cornière, directement ou via l'attache d'un deuxième type à deux ou trois degrés de liberté d'une articulation de pas, les premier et deuxième plans étant légèrement décalés l'un par rapport à l'autre,
- la liaison mécanique comportant une cornière et une biellette intermédiaire, le pied de chaque élément sustentateur est fixé à l'extrémité libre de la biellette intermédiaire, directement ou via l'attache d'un deuxième type à deux ou trois degrés de liberté d'une articulation de pas, les premier et deuxième plans étant sensiblement décalés l'un par rapport à l'autre.

De plus, les configurations renforcées suivantes sont envisageables :
- le pied de chaque élément sustentateur traverse la deuxième extrémité de la liaison mécanique pour être fixé à l'unité tournante du rotor par une attache d'un premier type à un ou deux degrés de liberté, ladite liaison mécanique étant agencée dans le premier plan des pales,
- la liaison mécanique comportant une cornière, le pied de chaque élément sustentateur traverse la deuxième zone extrémale de la cornière pour être fixé à l'unité tournante du rotor par une attache d'un premier type à un ou deux degrés de liberté, les premier et deuxième plans étant légèrement décalés l'un par rapport à l'autre,
- la liaison mécanique comportant une cornière et une biellette intermédiaire, le pied de chaque élément sustentateur traverse l'extrémité libre de la biellette intermédiaire pour être fixé à l'unité tournante du rotor par une attache d'un premier type à un ou deux degrés de liberté, les premier et deuxième plans étant sensiblement décalés l'un par rapport à l'autre,
- le moyen de soutien de chaque articulation de pas de chaque élément sustentateur traverse la deuxième extrémité de la liaison mécanique pour être fixé à l'unité tournante du rotor par une attache d'un deuxième type à deux ou trois degrés de liberté, ladite liaison mécanique étant agencée dans le premier plan des pales,
- la liaison mécanique comportant une cornière, le moyen de soutien de chaque articulation de pas de chaque élément sustentateur traverse la deuxième zone extrémale de la cornière pour être fixé à l'unité tournante du rotor par une attache d'un deuxième type à deux ou trois degrés de liberté, les premier et deuxième plans étant légèrement décalés l'un par rapport à l'autre,
- la liaison mécanique comportant une cornière et une biellette intermédiaire, le moyen de soutien de chaque articulation de pas de chaque élément sustentateur traverse l'extrémité libre de la biellette intermédiaire pour être fixé à l'unité tournante du rotor par une attache d'un deuxième type à deux ou trois degrés de liberté, les premier et deuxième plans étant sensiblement décalés l'un par rapport à l'autre.

Par ailleurs, le rotor peut comporter de manière optionnelle un moyen de butée faisant office de butée pour limiter le battement de chaque élément sustentateur.

Cette caractéristique garantit une certaine sécurité au système en empêchant que le battement des éléments sustentateurs soit trop important et par conséquent en limitant le pas des pales.

Ce moyen de butée est pourvu d'une plaque supérieure qui recouvre au moins partiellement une partie supérieure du moyeu du rotor, cette partie supérieure étant située du côté du moyeu opposé au fuselage de l'hélicoptère.

Selon une première version du moyen de butée, chaque élément sustentateur étant lié mécaniquement à une pale via successivement une articulation de pas et une liaison mécanique, le moyen de butée comporte un limiteur de course par élément sustentateur. Chaque limiteur de course, un vérin par exemple, est alors agencé entre la plaque supérieure et chaque articulation de pas pour limiter le battement de chaque élément sustentateur.

Le battement de chaque élément sustentateur est alors limité par la course du limiteur de course associé.

Selon une deuxième version du moyen de butée, ce moyen de butée est pourvu d'une plaque inférieure qui recouvre au moins partiellement une partie inférieure du moyeu du rotor, la partie inférieure étant située du côté du moyeu en regard du fuselage de l'hélicoptère.

Le battement de l'élément sustentateur, ou son articulation de pas à la liaison mécanique le liant à une pale, est alors limité par les plaques inférieure ou supérieure. En cas de battement trop important, l'élément sustentateur ou son articulation de pas le cas échéant entre en contact avec la plaque supérieure ou inférieure ce qui stoppe son déplacement.

Eventuellement, les plaques supérieure et inférieure peuvent être munies localement de moyens amortissants pour éviter de dégrader l'élément sustentateur ou son articulation de pas lorsque ces derniers sont en butée.

Par ailleurs, pour que le pilote puisse commander l'inclinaison des volets, selon une première forme du système de commande des volets, le rotor principal comportant un plateau cyclique de commande de pas muni d'un plateau tournant et d'un plateau non tournant, chaque volet est relié au plateau tournant par une bielle principale.

Le pilote commande le plateau cyclique, via des servocommandes par exemple, pour faire varier l'inclinaison des volets par rapport aux éléments sustentateurs auxquels ils sont reliés, et par suite pour modifier le pas des pales.

A pale équivalente, les servocommandes de l'invention auront des dimensions et un poids optimisés, avantageusement réduits, par rapport aux servocommandes mises en oeuvre par le troisième dispositif connu.

Selon une deuxième forme du système de commande des volets, le rotor comporte au moins un actionneur par volet agencé sur l'élément sustentateur associé pour ajuster l'inclinaison du volet par rapport à l'élément sustentateur auquel il est fixé.

Cet actionneur peut être alimenté électriquement via un collecteur électrique agencé sur un mât tournant du rotor.

Toutefois, il est avantageux que l'actionneur soit alimenté électriquement via un générateur électrique comportant un stator agencé à l'intérieur du mât tournant du rotor.

Indépendamment du système d'alimentation électrique de l'actionneur, on constate qu'il n'est plus nécessaire d'utiliser un plateau cyclique.

De plus, pour simplifier le système, chaque actionneur est éventuellement commandé par un moyen de transmission sans fil par ondes électromagnétiques dans les gammes radioélectriques, infrarouges, ou encore hyperfréquences.

Enfin, l'actionneur est avantageusement un actionneur piézoélectrique engendrant un déplacement angulaire. Cette caractéristique est particulièrement surprenante pour l'homme du métier.

En effet, les actionneurs piézoélectriques générant des déplacements de faibles amplitudes, ces actionneurs ne sont normalement pas utilisés pour une telle application. Cependant, compte tenu de l'amplification aérodynamique réalisée par l'élément sustentateur une faible inclinaison du volet suffit, ce qui permet d'utiliser un actionneur piézoélectrique pour ce faire.

L'invention et ses avantages apparaîtront avec plus de détails dans le cadre de la description qui suit avec des exemples de réalisation donnés à titre Illustratif en référence aux figures annexées qui représentent :
- la figure 1, une vue isométrique d'un premier mode de réalisation de l'invention relatif à la première forme du système de commande,
- la figure 2, une vue schématique explicitant un deuxième mode de réalisation de l'invention,
- la figure 3, une vue de côté schématique présentant la deuxième forme du système de commande
- la figure 4, une vue de côté d'une première version du moyen de butée,
- la figure 5, une vue de côté d'une deuxième version du moyen de butée,
- la figure 6, une vue de côté d'une première variante de l'agencement des éléments sustentateurs,
- la figure 7, une vue de côté d'une deuxième variante de l'agencement des éléments sustentateurs.
- la figure 8, une vue de côté d'une troisième variante de l'agencement des éléments sustentateurs,
- la figure 9 une vue montrant un agencement d'une bielle principal à un volet, et
- les figures 10 à 21, illustrant des figures schématiques explicitant les diverses configurations de l'invention.

Les éléments présents dans plusieurs figures distinctes sont affectés d'une seule et même référence.

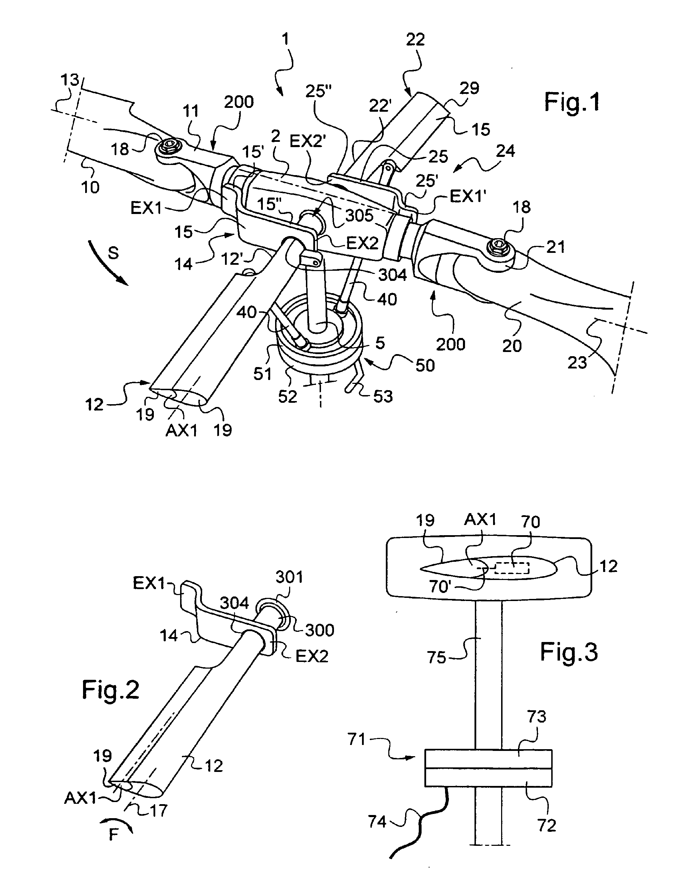

La figure 1 présente un rotor 1 d'hélicoptère. Ce rotor 1 est muni d'une première et d'une deuxième pales 10, 20 pourvues respectivement d'un premier et d'un deuxième moyens de fixation 11, 21 au moyeu 2 du rotor 1. Les moyens de fixation 11, 21 sont fixés au moyeu 2 par des moyens usuels non représentés, via des butées sphériques lamifiées par exemple permettant entre autres à chaque pale 10, 20 de pivoter autour de son premier axe longitudinal 13, 23 de variation de pas.

Sur les figures, les pales 10, 20 sont solidarisées à leur moyen de fixation 11, 21 par des broches 18.

Néanmoins, les moyens de fixation peuvent faire partie intégrante des pales sans sortir du cadre de l'invention. Par exemple, chaque moyen de fixation peut consister en un manchon intégré dans la pale. Par suite, chaque pale est bien pourvue d'un moyen de fixation.

De plus, le rotor 1 comporte un élément sustentateur 12, 22 par pale, chaque élément sustentateur étant situé en amont de la pale associée par rapport au sens d'avancement S de ladite pale associée. Ainsi, un premier et un deuxième éléments sustentateurs 12 ,22 sont respectivement liés mécaniquement aux première et deuxième pales 10, 20 via une première et une deuxième liaisons mécaniques 14, 24. Plus précisément, les premier et deuxième éléments sustentateurs 12 ,22 sont respectivement liés aux moyens de fixation 11, 21 de la zone d'attache 200 des première et deuxième pales 10, 20.

Chaque élément sustentateur 12, 22 comporte un volet 19, 29 de bord de fuite afin qu'un pilote puisse modifier la portance des éléments sustentateurs 12, 22. Le volet 19, 29 est agencé de manière usuelle sur l'élément sustentateur associé 12, 22.

Chaque liaison mécanique 14, 24 est pourvue d'une cornière 15, 25 coudée. Chaque liaison mécanique 14, 24 est solidarisée par sa première extrémité EX1, EX1' à une pale 10, 20, à savoir par la première zone extrémale 15', 25' de chaque cornière 15, 25.

Selon le premier mode de réalisation illustré par la figure 1, chaque deuxième extrémité EX2, EX2' des liaisons mécaniques 14, 24 est solidarisée à l'élément sustentateur 12, 22 associé de manière à ce que chaque élément sustenteur 12, 22 soit solidaire en rotation de la liaison mécanique 14, 24 correspondante autour de son axe de battement 303.

Ainsi , une première extrémité EX1 de la première liaison mécanique 14, c'est-à-dire la première zone extrémale 15' de la cornière 15, est alors solidarisée au premier moyen de fixation 11, par des vis non représentées par exemple. La deuxième extrémité EX2 de cette première liaison mécanique 14, c'est-à-dire la deuxième zone extrémale 15" de la cornière 15, est solidaire en rotation autour de l'axe de battement 303 du premier élément sustentateur 12, le pied 12' de l'élément sustentateur 12 traversant un orifice 304 de la deuxième extrémité EX2 de la première liaison mécanique 14.

De même, une première extrémité EX1' de la deuxième liaison mécanique 15 est solidarisée au deuxième moyen de fixation 21 alors que la deuxième extrémité EX2' de cette deuxième liaison mécanique 15 est solidarisée au deuxième élément sustentateur 22.

Selon ce premier mode de réalisation, le pilote de l'hélicoptère va incliner un ou plusieurs volets 19, 29 pour ajuster la portance de l'élément sustentateur associé 12, 22.

En inclinant le premier volet 19 par exemple autour de son axe d'inclinaison AX1, le pilote modifie la portance générée par l'ensemble premier élément sustentateur 12/ premier volet 19. Par suite, l'élément sustentateur se met à battre et entraîne la rotation de la première pale 10 autour de son premier axe longitudinal 13 de variation de pas.

De même, en inclinant le deuxième volet 29, le pilote modifie la portance générée par l'ensemble deuxième élément sustentateur 22/ deuxième volet 29 indépendamment de l'ensemble premier élément sustentateur 12/ premier volet 19. Ainsi, l'élément sustentateur 22 se met à battre et entraîne la rotation de la deuxième pale 20 autour de son premier axe longitudinal 23 de variation de pas.

Selon le deuxième mode de réalisation représenté sur la figure 2, chaque cornière 15, 25 coudée est solidarisée par sa deuxième extrémité EX2, EX2' à une articulation de pas 16 de l'élément sustentateur 12, 22 associé à ladite pale 10, 20. Grâce à cette articulation de pas 16, l'élément sustentateur est apte à réaliser un mouvement rotatif autour de son deuxième axe longitudinal 17 de variation de pas.

Ainsi , une première extrémité EX1 de la première cornière 15 est alors solidarisée au premier moyen de fixation 11, par des vis non représentées par exemple, alors qu'un orifice 304 de la deuxième extrémité EX2 de cette première cornière 15 est traversé par un moyen de soutien 300 de l'articulation de pas 16 du premier élément sustentateur 12. La première articulation de pas 16 autorise alors le premier élément sustentateur 12 à effectuer une rotation autour de son deuxième axe longitudinal 17 de variation de pas selon les flèches F.

On comprend qu'il en va de même pour tous les éléments sustentateurs, et ce de façon indépendante.

Selon ce deuxième mode de réalisation, le pilote de l'hélicoptère va incliner un ou plusieurs volets 19, 29 pour ajuster la portance de l'élément sustentateur associé 12, 22.

En inclinant le premier volet 19 par exemple autour de son axe d'inclinaison AX1, le pilote modifie la portance générée par l'ensemble premier élément sustentateur 12/ premier volet 19. L'élément sustentateur 12 tourne donc autour de son deuxième axe longitudinal 17 et se met à battre. Par suite, le premier élément sustentateur 12 entraîne la rotation de la première pale 10 autour de son premier axe longitudinal 13 de variation de pas.

Par conséquent, lorsque le premier élément sustentateur 12 bat, II tourne autour du premier axe longitudinal 13 de la première pale. Cet élément sustentateur 12 étant relié mécaniquement au premier moyen de fixation 11 de la première pale 1, cette première paie réalise à son tour un mouvement de rotation autour du premier axe longitudinal 13. Le pas de la première pale 1 est ainsi modifié.

Il est à noter que le deuxième mode de réalisation est d'autant plus intéressant que l'on profite d'un effet aérodynamique important en faisant varier le pas de l'élément sustentateur. L'inclinaison du volet nécessite des efforts plus faibles en mettant en oeuvre le deuxième mode de réalisation plutôt que le premier mode de réalisation.

En outre, afin d'ajuster la portance de chaque élément sustentateur 12, 22, le pilote commande le pas de ces éléments sustentateurs, à l'aide d'un système de commande.

En référence à la figure 1, selon une première forme de ce système de commande, le rotor 1 est équipé d'un plateau cyclique 50. Ce plateau cyclique 50 possède un plateau non tournant 52 lié à une zone non tournante de l'hélicoptère par un compas 53. Si le plateau non tournant 52 n'est pas entraîné en rotation par l'installation motrice de l'hélicoptère, il peut néanmoins être incliné par rapport au mât 5 du rotor 1, grâce à une rotule, via des servocommandes non représentées et activées par le pilote.

De plus, le plateau cyclique 50 est muni d'un plateau tournant 51 solidaire en rotation du mât 5. On note que le plateau cyclique 50 est d'un type usuel connu par l'homme du métier.

Dans ces conditions, chaque volet 19, 29 est relié au plateau tournant 51 du plateau cyclique 50 par une bielle principale 40 reliée au pied de l'élément sustentateur.

Le pilote induit un mouvement du plateau tournant à l'aide de ces commandes, ledit mouvement permettant d'incliner les volets des éléments sustentateurs via les bielles principales 40.

Selon la deuxième forme du système de commande représentée sur la figure 3, chaque volet 19 est solidarisé à au moins un actionneur 70, ledit actionneur étant un actionneur piézoélectrique apte à générer une rotation du volet autour de son axe d'inclinaison AX1.

L'actionneur peut alors engendrer un déplacement angulaire de sa tige 70' de sortie, ou encore un déplacement linéaire s'il est fixé sur un point d'ancrage déporté du volet, par rapport à son axe d'inclinaison AX1, comme le montre la figure 3.

Chaque actionneur 70 est fixé sur l'élément sustentateur associé, au niveau de son extrémité libre opposée à sa liaison mécanique 14, 24 par exemple.

Par conséquent, l'hélicoptère comporte un collecteur électrique 71, d'un type connu, muni d'un élément non tournant 72 et d'un élément tournant 73 équipé de balais, ou équivalent, permettant la circulation d'un courant électrique.

L'élément tournant 73 du collecteur électrique 71 est alors relié par un câble électrique 75 à l'actionneur 70, l'élément non tournant 72 étant relié par un câble électrique 74 à une d'alimentation électrique de l'hélicoptère.

Eventuellement, il est concevable de supprimer le collecteur 71 en le remplaçant par un générateur électrique. L'homme du métier réalise alors un générateur électrique à l'aide du mât 5 en disposant un stator à l'intérieur de ce mât.

Le stator est alors rigidement lié à la boite de transmission principale de l'hélicoptère alors que le rotor du générateur est lié au mât 5.

Ainsi, lorsque l'installation motrice de l'hélicoptère entraîne en rotation le rotor, le mouvement rotatif du mât 5 permet au générateur de créer une alimentation électrique pour alimenter électriquement les actionneurs des volets des éléments sustentateurs.

Les actionneurs étant alimentés électriquement, via un collecteur ou un générateur, chaque actionneur est équipé d'un module de réception de signaux sans fil de commande.

Le pilote agit alors sur les commandes de vol qui transmettent un signal de commande au module de réception des actionneurs pour incliner les volets.

Il convient de préciser que l'utilisation d'un élément sustentateur pour faire varier le pas d'une pale permet de limiter les efforts de commande, par rapport aux dispositifs connus de l'art antérieur.

Ainsi, il devient possible d'utiliser des actionneurs piézoélectriques pour le pilotage du pas collectif et du pas cyclique de l'hélicoptère. Cette constatation est surprenante dans la mesure où de tels actionneurs ne sont normalement pas adaptés à cet usage du fait des faibles déplacements qu'ils induisent.

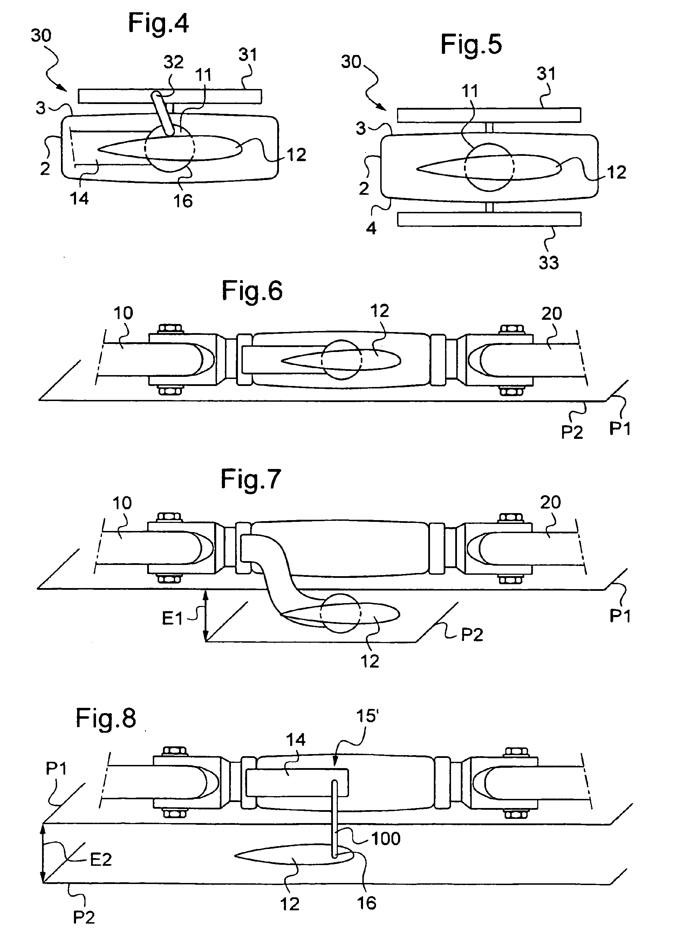

Quel que soit le mode de réalisation, en référence aux figures 4 et 5, l'hélicoptère est avantageusement équipé d'un moyen de butée 30 des éléments sustentateurs pour limiter leur battement.

Ce moyen de butée 30 comporte une plaque supérieure 31 qui recouvre partiellement, ou totalement, le moyeu 2 du rotor 1. La plaque supérieure 31 est donc en regard de la partie supérieure 3 du moyeu 2 la plus éloignée du fuselage de l'hélicoptère.

Selon une première version de ce moyen de butée 30 schématisée sur la figure 4, le moyen de butée 30 est aussi muni d'un limiteur de course 32, par exemple un vérin, pour chaque élément sustentateur.

Chaque vérin 32 est alors fixé sur la plaque supérieure 31 et sur l'élément sustentateur 12 associé.

La course prédéterminée du vérin limite ainsi avantageusement le battement de l'élément sustentateur 12.

Selon une deuxième version illustrée par la figure 5, le moyen de butée 30 comporte non pas un vérin mais une plaque inférieure 33 en regard de la partie inférieure 4 du moyeu 2 la plus proche du fuselage de l'hélicoptère.

Les plaques supérieure et inférieure 31, 33 saillent du moyeu 2. Ainsi, lorsque le battement de l'élément sustentateur dépasse un certain seuil, l'élément sustentateur entre en contact avec la plaque supérieure 31, ou la plaque inférieure 33, ce qui stoppe son mouvement.

Des éléments amortissants, une butée en élastomère par exemple, peuvent être agencés sur les plaques supérieure 31 et inférieure 33 pour que l'élément sustentateur ne soit pas endommagé par le choc résultant du contact.

Par ailleurs, en référence aux figures 6 et 7, les pales 10, 20 sont toutes contenues dans un premier plan P1 lorsqu'elles ne battent pas. Le premier plan P1 contient donc les premiers axes longitudinaux 13, 23 de variation de pas des pales 10, 20.

De même, les éléments sustentateurs sont tous contenus dans un unique plan P2. Ainsi, le deuxième plan P2 contient les deuxièmes axes longitudinaux 17, 27 de variation de pas des éléments sustentateurs 12, 22.

Selon une première variante décrite par la figure 6, les premier et deuxième plans P1 et P2 sont confondus.

Toutefois, selon une deuxième variante schématisée sur la figure 7, ces premier et deuxième plans P1, P2 sont décalés l'un par rapport à l'autre, le premier plan P1 étant situé légèrement au dessus du deuxième plan P2.

Le décalage E1 existant entre les premier et deuxième plans P1, P2 est de l'ordre de l'épaisseur de l'élément sustentateur.

Enfin, selon la troisième variante décrite par la figure 8, le décalage E2 séparant les premier et deuxième plans P1, P2 est important, en étant de l'ordre de la corde de l'élément sustentateur.

Ainsi, une biellette intermédiaire 100 est agencée entre la deuxième zone extrémale 15', 25' de chaque cornière et l'élément sustentateur associé 12.

Selon le premier mode de réalisation, la biellette intermédiaire est directement solidarisée à l'élément sustentateur alors que selon le deuxième mode de réalisation, l'extrémité libre de la biellette intermédiaire est traversée par le moyen de soutien de l'articulation de pas de l'élément sustentateur correspondant.

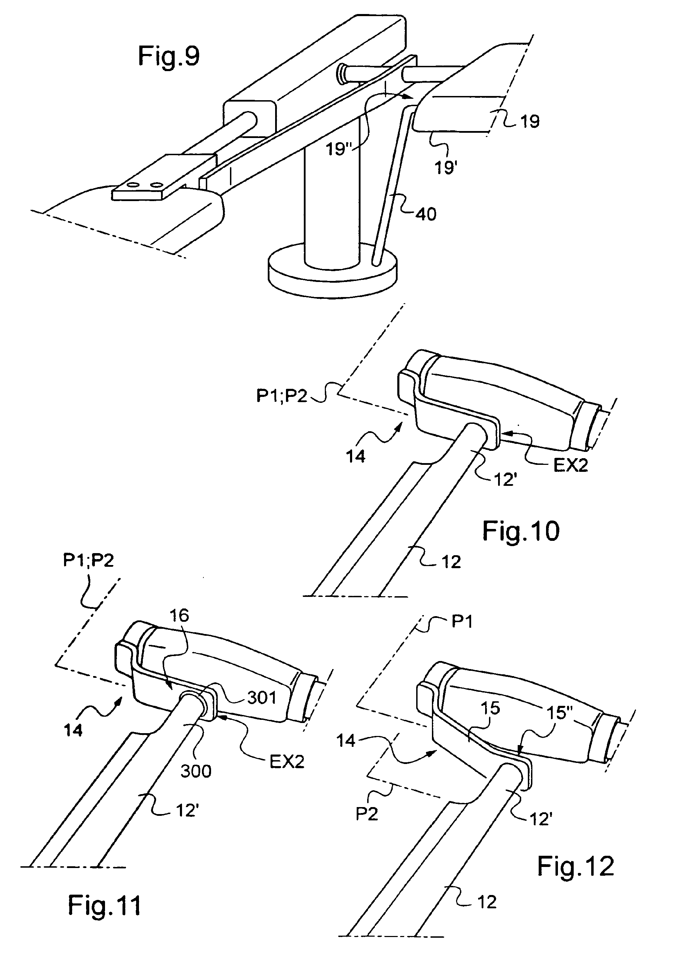

Le figure 9 présente une vue schématique montrant la fixation de la bielle principale 40, mise en oeuvre par la première forme du système de commande. Cette bielle principale 40 est reliée au bord de fuite 19' du volet de l'élément sustentateur.

Selon le deuxième mode de réalisation présenté sur la figure 9, cet agencement crée un couplage pas/battement globalement stabilisant pour le pas.

Il est à noter que selon le premier mode de réalisation, le couplage aurait plutôt été déstabilisant. La bielle principale 40 aurait alors été de préférence reliée au bord d'attaque 19" du volet.

Les figures 10 à 15 permettent d'illustrer des configurations allégées de l'agencement de chaque élément sustentateur.

Selon la première variante du premier mode de réalisation de la configuration allégée représentée sur la figure 10, le pied 12' de l'élément sustentateur 12 est rigidement fixé à la deuxième extrémité EX2 de la liaison mécanique 14, le premier plan P1 contenant les pales lorsqu'elles ne battent pas étant confondu avec le deuxième plan P2 contenant les éléments sustentateurs lorsqu'ils ne battent pas.

En référence à le figure 11, selon la première variante du deuxième mode de réalisation de la configuration allégée, le pied 12' de l'élément sustentateur 12 est rigidement fixé au moyen de soutien 300 de l'articulation de pas 16. De plus, l'attache d'un deuxième type à deux ou trois degrés de liberté 301 de cette articulation de pas 16 est fixée à la deuxième extrémité EX2 de la liaison mécanique 14, le premier plan P1 étant confondu avec le deuxième plan P2 contenant les éléments sustentateurs lorsqu'ils ne battent pas.

La figure 12 présente la deuxième variante du premier mode de réalisation de la configuration allégée.

La liaison mécanique 14 comporte une cornière 15 légèrement inclinée de haut en bas avec le pied 12' de l'élément sustentateur 12 fixé à la deuxième zone extrémale 15" de la cornière, les premier et deuxième plans étant légèrement décalés l'un par rapport à l'autre.

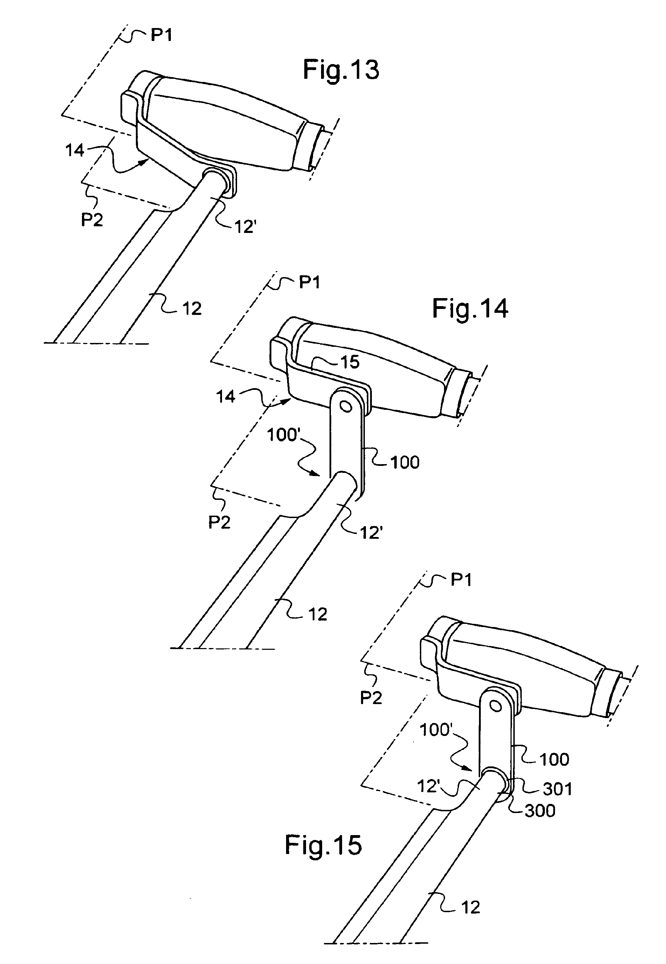

De même, en référence à la figure 13, la deuxième variante du deuxième mode de réalisation de la configuration allégée diffère de la première variante de ce mode en ce que les plans P1 et P2 sont décalés l'un par rapport à l'autre.

Conformément à la figure 14, selon la troisième variante du premier mode réalisation de la configuration allégée, la liaison mécanique 14 comporte une cornière 15 et une biellette intermédiaire 100 avec le pied 12' de l'élément sustentateur rigidement fixé à l'extrémité libre 100' de la biellette intermédiaire 100, les premier et deuxième plans P1, P2 étant sensiblement décalés l'un par rapport à l'autre.

Enfin, selon la troisième variante du deuxième mode réalisation schématisée sur le figure 15 de la configuration allégée, la liaison mécanique 14 comporte une cornière 15 et une biellette intermédiaire 100 avec le pied 12' de l'élément sustentateur rigidement fixé au moyen de soutien 300 de l'articulation de pas 16 de l'élément sustentateur, ce moyen de soutien 300 étant fixé à l'attache d'un deuxième type à deux ou trois degrés de liberté 301 rigidement liée à l'extrémité libre 100' de la biellette intermédiaire 100, les premier et deuxième plans P1, P2 étant sensiblement décalés l'un par rapport à l'autre.

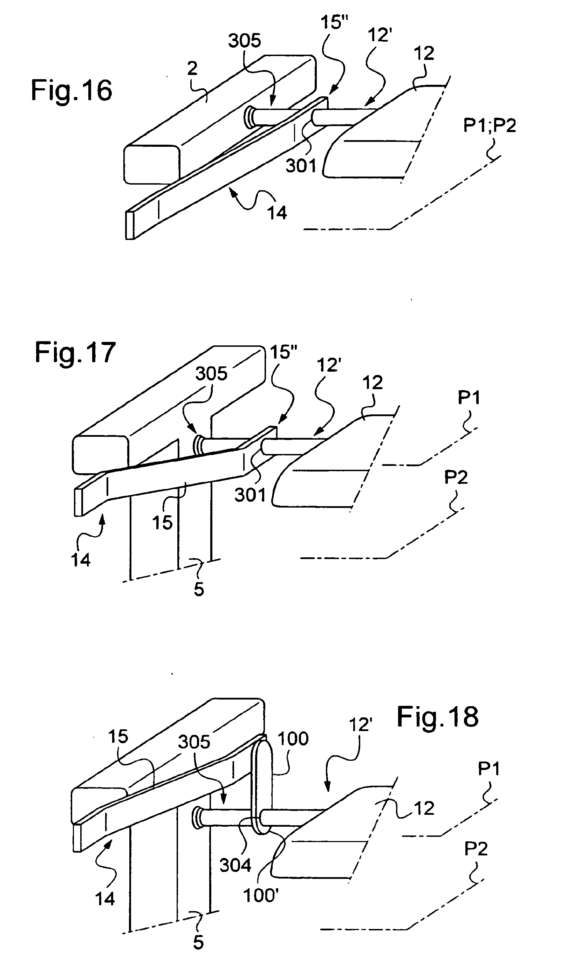

En outre, les figures 16 à 21 explicitent les configurations renforcées de l'invention.

En référence à la figure 16, selon la première variante du premier mode de réalisation de la configuration renforcée, le pied 12' de l'élément sustentateur 12 traverse un orifice 304 la deuxième extrémité EX2 de la liaison mécanique 14 pour être fixé à l'unité tournante du rotor, le moyeu 2 en l'occurrence, par une attache d'un premier type à un ou deux degrés de liberté 305, ladite liaison mécanique 14 étant agencée dans le premier plan P1 des pales.

La figure 17 présente la deuxième variante du premier mode de réalisation de la configuration renforcée. La liaison mécanique comportant une cornière 15, le pied 12' de l'élément sustentateur traverse un orifice 304 de la deuxième zone extrémale 15" de la cornière 15 pour être fixé à l'unité tournante du rotor, le mât 5 par exemple, par une attache d'un premier type à un ou deux degrés de liberté 305, les premier et deuxième plans étant légèrement décalés l'un par rapport à l'autre.

La figure 18 présente la troisième variante du premier mode de réalisation de la configuration renforcée. La liaison mécanique 14 comportant une cornière 15 et une biellette intermédiaire 100, le pied 12' de l'élément sustentateur traverse un orifice 304 de l'extrémité libre 100' de la biellette intermédiaire 100 pour être fixé à l'unité tournante du rotor, à son mât 5, par une attache d'un premier type à un ou deux degrés de liberté 305. Les premier et deuxième plans P1, P2 sont sensiblement décalés l'un par rapport à l'autre.

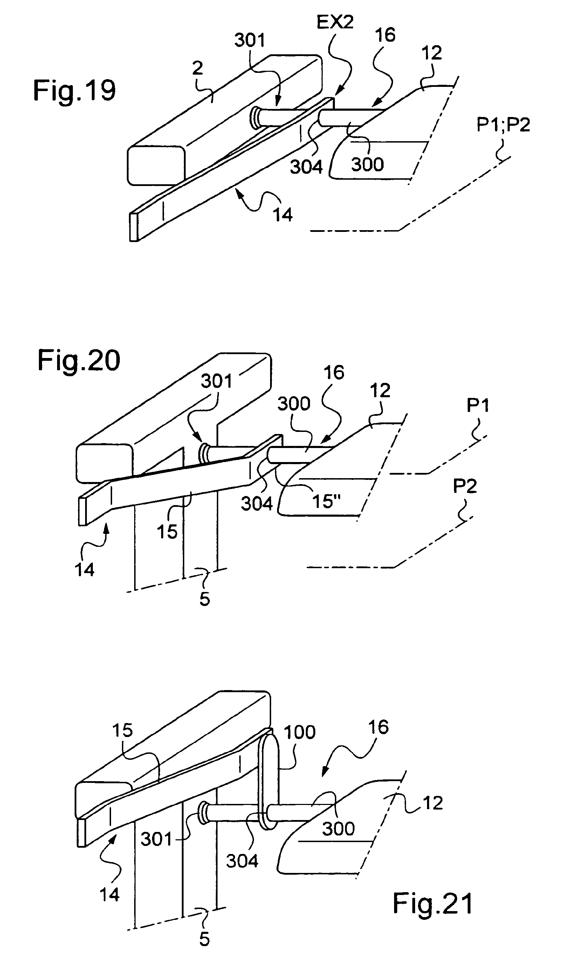

En référence à la figure 19, selon la première variante du deuxième mode de réalisation de la configuration renforcée, le moyen de soutien 300 de l'articulation de pas 16 de l'élément sustentateur 12 traverse un orifice 304 de la deuxième extrémité EX2 de la liaison mécanique 14 pour être fixé à l'unité tournante du rotor, le moyeu 2, par une attache d'un deuxième type à deux ou trois degrés de liberté 301. La liaison mécanique est alors agencée dans le premier plan P1. les premier et deuxième plans P1, P2 étant confondus.

La figure 20 montre la deuxième variante du deuxième mode de réalisation de la configuration renforcée. La liaison mécanique 14 comportant une cornière 15, le moyen de soutien 300 de l'articulation de pas 16 de l'élément sustentateur 12 traverse la deuxième zone extrémale 15" de la cornière 15 pour être fixé à l'unité tournante du rotor par une attache d'un deuxième type à deux ou trois degrés de liberté 301, les premier et deuxième plans P1, P2étant légèrement décalés l'un par rapport à l'autre.

Enfin, la figure 21 présente la troisième variante du deuxième mode de réalisation de la configuration renforcée.

La liaison mécanique 14 comportant une cornière 15 et une biellette intermédiaire 100, le moyen de soutien 300 de l'articulation de pas 16 de l'élément sustentateur 12 traverse un orifice 304 de l'extrémité libre 100' de la biellette intermédiaire 100 pour être fixé à l'unité tournante du rotor par une attache d'un deuxième type à deux ou trois degrés de liberté 301, les premier et deuxième plans P1, P2 étant sensiblement décalés l'un par rapport à l'autre.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sur envisageable de remplacer un moyen décrit par un moyen équivalent sans sortir du cadre de la présente invention.

Par exemple, les figures décrivent un rotor comportant deux pales et par suite deux éléments sustentateurs. Toutefois, l'invention est adaptable sur un hélicoptère comportant un nombre plus important de pales sans aucune difficulté.

De plus, les figures 1 et 2 montrent que la cornière liant mécaniquement un élément sustentateur à une pale correspondante est fixée par sa première extrémité au moyen de fixation de ladite pale.

Néanmoins, cette première extrémité de la cornière peut être solidarisée non pas au moyen de fixation mais à la pale elle-même, à un tronçon du pied de la pale par exemple, d'autant plus que le moyen de fixation peut être intégré à cette pale.

De manière plus générale, la cornière est fixée à la zone d'attache 200 de la pale au moyeu du rotor montrée sur la figure 1.

## Revendications

1. Hélicoptère muni d'un rotor principal (1) comportant au moins deux pales (10, 20), chaque pale (10, 20) étant pourvue d'un moyen de fixation (11, 21) à un moyeu (2) du rotor (1)
ledit hélicoptère étant
muni d'un élément sustentateur (12, 22) par pale (10, 20), **caractérisé en ce que** ledit élément sustentateur étant pourvu d'un volet inclinable (19, 29), chaque élément sustentateur (12, 22) étant lié mécaniquement à une unique pale (10, 20) pour faire varier le pas de ladite unique pale (10, 20), chaque élément sustentateur (12, 22) est solidaire en rotation de la pale (10, 20) à laquelle il est mécaniquement lié autour d'un premier axe longitudinal (13, 23) de variation de pas de ladite pale (10, 20).

2. Hélicoptère selon la revendication 1,
**caractérisé en ce que**, chaque élément sustentateur (12, 22) étant lié mécaniquement à une unique pale (10, 20) par une liaison mécanique (14, 24) indépendante du moyeu (2) du rotor (1), ladite liaison mécanique (14, 24) comporte une première extrémité (EX1) solidarisée à une zone d'attache (200) de la pale (10), ledit élément sustentateur (12, 22) étant solidarisé à une deuxième extrémité (EX2) de la liaison mécanique (14, 24) afin que l'élément sustentateur (12, 22) et la liaison mécanique (14, 24) soient solidaires en rotation autour d'un axe de battement (303) de cet élément sustentateur (12,22).

3. Hélicoptère selon la revendication 2,
**caractérisé en ce que** un pied (12') de chaque élément sustentateur (12, 22) traverse un orifice de ladite deuxième extrémité de la liaison mécanique pour être fixé à une unité tournante via attache d'un premier type à un ou deux degrés de liberté (305).

4. Hélicoptère selon l'une quelconque des revendications 1 à 2,
**caractérisé en ce que**, chaque élément sustentateur (12, 22) étant lié mécaniquement à une unique pale (10, 20) par une liaison mécanique (14, 24), ladite liaison mécanique (14, 24) comporte une première extrémité (EX1) solidarisée au moyen de fixation (11, 21) de la pale (10, 20), ledit élément sustentateur (12, 22) étant solidarisé en rotation autour de l'axe de battement (303) dudit élément sustentateur (12, 22) à une deuxième extrémité (EX2) de la liaison mécanique (14, 24) via une articulation (16, 26) de pas permettant à l'élément sustentateur (12, 22) d'effectuer un mouvement rotatif autour d'un deuxième axe longitudinal (17, 27) de variation de pas de l'élément sustentateur (12, 22).

5. Hélicoptère selon la revendication 4,
**caractérisé en ce qu'**un pied (12') de chaque élément sustentateur (12, 22) traverse un orifice de ladite deuxième extrémité de la liaison mécanique pour être fixé une unité tournante via ladite articulation (16, 26) de pas.

6. Hélicoptère selon l'une quelconque des revendications 2 à 5.
**caractérisé en ce que**, ladite zone d'attache (200) englobant le moyen de fixation (11, 21) de la pale (10) et un tronçon de cette pale, ladite première extrémité (EX1) est solidarisée audit moyen de fixation (11, 21).

7. Hélicoptère selon l'une quelconque des revendications 2 à 5,
**caractérisé en ce que**, ladite zone d'attache (200) englobant le moyen de fixation (11, 21) de la pale (10) et un tronçon de cette pale, ladite première extrémité (EX1) est solidarisée audit tronçon.

8. Hélicoptère selon l'une quelconque des revendications 2 à 7,
**caractérisé en ce que**, ladite liaison mécanique (14, 24) est une cornière.

9. Hélicoptère selon l'une quelconque des revendications 2 à 7,
**caractérisé en ce que** ladite liaison mécanique (14) comporte une cornière (15) articulée à une biellette intermédiaire (100), la première extrémité (EX1) de la liaison mécanique (14) correspondant à la première zone extrémale (15') de la cornière (15) qui n'est pas liée à la biellette intermédiaire (100), la deuxième extrémité (EX2) de la liaison mécanique (100) étant représentée par l'extrémité libre (100') de la biellette intermédiaire (100) qui n'est pas liée à la cornière (15).

10. Hélicoptère selon l'une quelconque des revendications 1 à 8.
**caractérisé en ce que**, les pales (10, 20) étant contenues dans un premier plan (P1) lorsqu'elles ne battent pas, les éléments sustentateurs (12, 22) liés mécaniquement auxdites pales (10, 20) étant contenus dans un deuxième plan (P2) lorsqu'ils ne battent pas, lesdits premier et deuxième plans (P1, P2) sont confondus.

11. Hélicoptère selon l'une quelconque des revendications 1 à 7,
**caractérisé en ce que**, les pales (10, 20) étant contenues dans un premier plan (P1) lorsqu'elles ne battent pas et les éléments sustentateurs (12, 22) liés mécaniquement auxdites pales (10, 20) étant contenus dans un deuxième plan (P2) lorsqu'ils ne battent pas, lesdits premier et deuxième plans (P1, P2) sont parallèles entre eux.

12. Hélicoptère selon l'une quelconques des revendications précédentes,
**caractérisé en ce que**, ledit rotor (1) comporte un moyen de butée (30) pour limiter le battement de chaque élément sustentateur (12).

13. Hélicoptère selon la revendication 12,
**caractérisé en ce que**, ledit moyen de butée (30) est pourvu d'une plaque supérieure (31) qui recouvre au moins partiellement une partie supérieure (3) du moyeu (2) du rotor (1), ladite partie supérieure (3) étant située du côté du moyeu (2) opposé à un fuselage de l'hélicoptère.

14. Hélicoptère selon la revendication 13,
**caractérisé en ce que**, chaque élément sustentateur (12) étant lié mécaniquement à une pale (10), ledit moyen de butée (30) comporte un vérin (32) par élément sustentateur (12), chaque vérin (32) étant agencé entre ladite plaque supérieure (31) et chaque élément sustentateur pour limiter le battement de chaque élément sustentateur (12).

15. Hélicoptère selon la revendication 13,
**caractérisé en ce que**, ledit moyen de butée (30) est pourvu d'une plaque inférieure (33) qui recouvre au moins partiellement une partie inférieure (4) du moyeu (2) du rotor (1), ladite partie inférieure (4) étant située du côté du moyeu (2) en regard du fuselage de l'hélicoptère.

16. Hélicoptère selon l'un quelconque des revendications précédentes,
**caractérisé en ce que**, ledit rotor (2) principal comportant un plateau cyclique (50) de commande de pas muni d'un plateau tournant (51) et d'un plateau non tournant (52), chaque volet (19,29) est relié audit plateau tournant (51) par une bielle principale (40).

17. Hélicoptère selon l'un quelconque des revendications 1 à 15,
**caractérisé en ce que**, ledit rotor (1) comporte au moins un actionneur (70)par volet (19,29) agencé sur l'élément sustentateur associé pour ajuster l'inclinaison du volet (19,29) par rapport à l'élément sustentateur auquel il est fixé.

18. Hélicoptère selon la revendication 15,
**caractérisé en ce que**, ledit actionneur (70) est alimenté électriquement via un collecteur électrique (71) agencé sur un mât (5) tournant du rotor (2).

19. Hélicoptère selon la revendication 17,
**caractérisé en ce que**, ledit actionneur (70) est alimenté électriquement via un générateur électrique comportant un stator agencé à l'intérieur d'un mât (5) tournant du rotor (2).

20. Hélicoptère selon l'une quelconque des revendications 17 à 19,
**caractérisé en ce que**, ledit actionneur (70) est commandé par un moyen de transmission sans fil.

21. Hélicoptère selon l'une quelconque des revendications 17 à 20,
**caractérisé en ce que**, ledit actionneur (70) est un actionneur piézoélectrique engendrant un déplacement angulaire.

22. Hélicoptère selon l'une quelconque des revendications précédentes,
**caractérisé en ce que** chaque élément sustentateur (12, 22) est géré de manière indépendante, fonctionnellement et mécaniquement, de manière à faire varier individuellement le pas d'une unique pale.

23. Procédé pour faire varier le pas d'une pale d'un rotor d'hélicoptère comportant au moins deux pales,
**caractérisé en ce que**, un élément sustentateur (12, 22) pourvu d'un volet (19,29) étant uniquement lié à ladite pale (10, 20), on ajuste la portance générée par ledit élément sustentateur (12, 22) en inclinant le volet (19,29) par rapport à l'élément sustentateur afin que cet élément sustentateur (12, 22) batte pour entraîner en rotation la pale (10, 20) à laquelle il est lié autour d'un premier axe longitudinal (13, 23) de variation de pas de ladite pale (10, 20).

## Patentansprüche

1. Hubschrauber mit einem Hauptrotor (1), der mindestens zwei Rotorblätter (10, 20) aufweist, wobei jedes Rotorblatt (10, 20) mit einem Mittel (11, 21) zur Befestigung an einer Nabe (2) des Rotors (1) versehen ist, wobei der Hubschrauber mit einem Auftriebselement (12, 22) pro Rotorblatt (10, 20) versehen ist,
**dadurch gekennzeichnet, dass** das Auftriebselement mit einer neigbaren Klappe (19, 29) versehen ist, wobei jedes Auftriebselement (12, 22) mechanisch mit einem einzelnen Rotorblatt (10, 20) verbunden ist, um den Anstellwinkel des einzelnen Rotorblatts (10, 20) zu verändern, wobei jedes Auftriebselement (12, 22) drehfest an dem Rotorblatt (10, 20), mit dem es mechanisch um eine erste Längsachse (13, 23) zur Veränderung des Anstellwinkels dieses Rotorblatts (10, 20) verbunden ist, befestigt ist.

2. Hubschrauber nach Anspruch 1,
**dadurch gekennzeichnet, dass** jedes Auftriebselement (12, 22) mechanisch mit einem einzelnen Rotorblatt (10, 20) über eine mechanische Verbindung (14, 24) unabhängig von der Nabe (2) des Rotors (1) verbunden ist, wobei die mechanische Verbindung (14, 24) ein erstes Ende (EX1) aufweist, welches an einem Befestigungsbereich (20) des Rotorblatts (10) befestigt ist, wobei das Auftriebselement (12, 22) an einem zweiten Ende (EX2) der mechanischen Verbindung (14, 24) befestigt ist, damit das Auftriebselement (12, 22) und die mechanische Verbindung (14, 24) drehfest um eine Schlagachse (303) dieses Auftriebselements (12, 22) miteinander verbunden sind.

3. Hubschrauber nach Anspruch 2,
**dadurch gekennzeichnet, dass** ein Fuß (12') eine jeden Auftriebselements (12, 22) eine Öffnung des zweiten Endes der mechanischen Verbindung durchquert, um an einer sich drehenden Einheit über eine Befestigung eines ersten Typs (305) mit einem oder zwei Freiheitsgraden befestigt zu sein.

4. Hubschrauber nach einem der Ansprüche 1 bis 2,
**dadurch gekennzeichnet, dass** jedes Auftriebselement (12, 22) mechanisch mit einem einzelnen Rotorblatt (10, 20) über eine mechanische Verbindung (14, 24) verbunden ist, wobei die mechanische Verbindung (14, 24) ein erstes Ende (EX1) aufweist, welches am Befestigungsmittel (11, 21) des Rotorflügels (10, 20) befestigt ist, wobei das Auftriebselement (12, 22) drehfest um die Schlagachse (303) des Auftriebselements (12, 22) mit einem zweiten Ende (EX2) der mechanischen Verbindung (14, 24) über ein Anstellwinkelgelenk (16, 26) verbunden ist, welches es dem Auftriebselement (12, 22) ermöglicht, eine Drehbewegung um eine zweite Längsachse (17, 27) zur Veränderung des Anstellwinkels des Auftriebselements (12, 22) durchzuführen.

5. Hubschrauber nach Anspruch 4,
**dadurch gekennzeichnet, dass** ein Fuß (12') eines jeden Auftriebselements (12, 22) eine Öffnung des zweiten Endes der mechanischen Verbindung durchquert, um an einer drehenden Einheit über das Anstellwinkelgelenk (16, 26) befestigt zu sein.

6. Hubschrauber nach einem der Ansprüche 2 bis 5,
**dadurch gekennzeichnet, dass** der Befestigungsbereich (200) das Befestigungsmittel (11, 21) des Rotorblatts (10) und einen Abschnitt dieses Rotorblatts umfasst, wobei das erste Ende (EX1) an dem Befestigungsmittel (11, 21) befestigt ist.

7. Hubschrauber nach einem der Ansprüche 2 bis 5,
**dadurch gekennzeichnet, dass** der Befestigungsbereich (200) das Befestigungsmittel (11, 21) des Rotorblatts (10) und einen Abschnitt dieses Rotorblatts umfasst, wobei das erste Ende (EX1) an dem Abschnitt befestigt ist.

8. Hubschrauber nach einem der Ansprüche 2 bis 7,
**dadurch gekennzeichnet, dass** die mechanische Verbindung (14, 24) ein Winkelprofil ist.

9. Hubschrauber nach einem der Ansprüche 2 bis 7,
**dadurch gekennzeichnet, dass** die mechanische Verbindung (14) ein Winkelprofil (15) aufweist, welches an einem Zwischengestänge (100) angelenkt ist, wobei das erste Ende (EX1) der mechanischen Verbindung (14) dem ersten Endbereich (15') des Winkelprofils (15) entspricht, der nicht mit dem Zwischengestänge (100) verbunden ist, wobei das zweite Ende (EX2) der mechanischen Verbindung (100) von dem zweiten freien Ende (100') des Zwischengestänges (100) dargestellt wird, welches nicht mit dem Winkelprofil (15) verbunden ist.

10. Hubschrauber nach einem der Ansprüche 1 bis 8,
**dadurch gekennzeichnet, dass** die Rotorblätter (10, 20) in einer ersten Ebene (P1) liegen, wenn sie nicht schlagen, wobei die Auftriebselemente (12, 22), die mechanisch mit den Rotorblättern (10, 20) verbunden sind, in einer zweiten Ebene (P2) liegen, wenn sie nicht schlagen, wobei die erste und die zweite Ebene (P1, P2) ineinander übergehen.

11. Hubschrauber nach einem der Ansprüche 1 bis 7,
**dadurch gekennzeichnet, dass** die Rotorblätter (10, 20) in einer ersten Ebene (P1) liegen, wenn sie nicht schlagen, und die Auftriebselemente (12, 22), die mechanisch mit den Rotorblättern (10, 20) verbunden sind, in einer zweiten Ebene (P2) liegen, wenn sie nicht schlagen, wobei die erste Ebene und die zweite Ebene (P1, P2) parallel zueinander verlaufen.

12. Hubschrauber nach einem der vorstehenden Ansprüche,
**dadurch gekennzeichnet, dass** der Rotor (1) ein Anschlagsmittel (30) aufweist zum Begrenzen des Schlagens eines jeden Auftriebselements (12).

13. Hubschrauber nach Anspruch 12,
**dadurch gekennzeichnet, dass** das Anschlagsmittel (30) mit einer oberen Platte (31) versehen ist, die mindestens teilweise einen oberen Teil (3) der Nabe (2) des Rotors (1) abdeckt, wobei der obere Teil (3) auf der Seite der Nabe (2) gegenüber dem Rumpf des Helikopters gelegen ist.

14. Hubschrauber nach Anspruch 13,
**dadurch gekennzeichnet, dass** jedes Auftriebselement (12) mechanisch mit einem Rotorblatt (10) verbunden ist, wobei die Anschlagsmittel (30) pro Auftriebselement (12) eine Gasdruckfeder (32) aufweist, wobei jede Gasdruckfeder (32) zwischen der oberen Platte (31) und jedem Auftriebselement angeordnet ist, um das Schlagen jedes Auftriebselements (12) zu begrenzen.

15. Hubschrauber nach Anspruch 13,
**dadurch gekennzeichnet, dass** das Anschlagsmittel (30) mit einer unteren Platte (33) versehen ist, die mindestens teilweise einen unteren Teil (4) der Nabe (2) des Rotors (1) bedeckt, wobei das untere Teil (4) auf der Seite der Nabe (2) gegenüber dem Helikopterrumpf liegt.

16. Hubschrauber nach einem der vorstehenden Ansprüche,
**dadurch gekennzeichnet, dass** der Hauptrotor (2) eine Taumelscheibe (50) zur Steuerung des Anstellwinkels aufweist mit einer sich drehenden Scheibe (51) und einer sich nicht drehenden Scheibe (52), wobei jede Klappe (19, 29) mit der sich drehenden Scheibe (51) über ein Hauptgestänge (40) verbunden ist.

17. Hubschrauber nach einem der Ansprüche 1 bis 15,
**dadurch gekennzeichnet, dass** der Rotor (1) mindestens einen Schalter (70) pro Klappe (19, 29) aufweist, der auf dem zugehörigen Auftriebselement angeordnet ist, um die Neigung der Klappe (19, 29) relativ zu dem Auftriebselement, an dem er befestigt ist, einzustellen.

18. Hubschrauber nach Anspruch 15,
**dadurch gekennzeichnet, dass** der Schalter (70) über einen elektrischen Speicher (71), der auf der Rotorwelle (5) des Rotors (2) angeordnet ist, mit Strom versorgt wird.

19. Hubschrauber nach Anspruch 17,
**dadurch gekennzeichnet, dass** der Schalter (70) über einen Stromgenerator mit Strom versorgt wird, der einen Stator aufweist, der im Inneren der Welle (5) des Rotors (2) angeordnet ist.

20. Hubschrauber nach einem der Ansprüche 17 bis 19,
**dadurch gekennzeichnet, dass** der Schalter (70) über ein drahtloses Übertragungsmittel gesteuert wird.

21. Hubschrauber nach einem der Ansprüche 17 bis 20,
**dadurch gekennzeichnet, dass** der Schalter (70) ein piezoelektrischer Schalter ist, der eine Winkelverschiebung erzeugt.

22. Hubschrauber nach einem der vorstehenden Ansprüche,
**dadurch gekennzeichnet, dass** jedes Auftriebselement (12, 22) funktionell und mechanisch unabhängig gesteuert wird, sodass der Anstellwinkel eines einzelnen Rotorblatts individuell verstellt werden kann.

23. Verfahren zur Verstellung des Anstellwinkels eines Rotorblatts eines Rotors eines Helikopters mit mindestens zwei Rotorblättern, **dadurch gekennzeichnet, dass** ein Auftriebselement (12, 22) mit einer Klappe (19, 29) ausschließlich mit dem Rotorblatt (10, 20) verbunden ist, wobei man den durch das Auftriebselement (12, 22) erzeugten Auftrieb einstellt, indem man die Klappe (19, 29) relativ zu dem Auftriebselement neigt, damit dieses Auftriebselement (12, 22) schlägt, um das Rotorblatt (10, 20), an dem es befestigt ist, um eine erste Längsachse (13, 23) zur Verstellung des Anstellwinkels des Rotorblatts (10, 20) zu einer Drehbewegung anzutreiben.

## Claims

1. A helicopter provided with a main rotor (1) comprising at least two blades (10, 20), each blade (10, 20) being provided with a means (11, 21) for fastening to a hub (2) of the rotor (1), said helicopter being provided with one lift element (12, 22) per blade (10, 20), **characterised in that**, said lift element being provided with a tiltable flap (19, 29), each lift element (12, 22) being connected mechanically to a single blade (10, 20) in order to vary the pitch of said single blade (10, 20), each lift element (12, 22) is integral in rotation with the blade (10, 20) to which it is mechanically connected about a first longitudinal axis (13, 23) for varying the pitch of said blade (10, 20).

2. A helicopter according to Claim 1, **characterised in that**, each lift element (12, 22) being connected mechanically to a single blade (10, 20) by a mechanical connection (14, 24) which is independent of the hub (2) of the rotor (1), said mechanical connection (14, 24) comprises a first end (EX1) which is secured to an attachment zone (200) of the blade (10), said lift element (12, 22) being secured to a second end (EX2) of the mechanical connection (14, 24) so that the lift element (12, 22) and the mechanical connection (14, 24) are integral in rotation about a flapping axis (303) of this lift element (12, 22).

3. A helicopter according to Claim 2, **characterised in that** a foot (12') of each lift element (12, 22) passes through an orifice in said second end of the mechanical connection, to be fastened to a rotary unit via attachment of a first type with one or two degrees of freedom (305).

4. A helicopter according to any one of Claims I to 2, **characterised in that**, each lift element (12, 22) being connected mechanically to a single blade (10, 20) by a mechanical connection (14, 24), said mechanical connection (14, 24) comprises a first end (EX1) secured to the fastening means (11, 21) of the blade (10, 20), said lift element (12, 22) being secured in rotation about the flapping axis (303) of said lift element (12, 22) to a second end (EX2) of the mechanical connection (14, 24) via a pitch hinge (16, 26) allowing the lift element (12, 22) to effect a rotary movement about a second longitudinal axis (17, 27) for varying the pitch of the lift element (12, 22).

5. A helicopter according to Claim 4, **characterised in that** a foot (12') of each lift element (12, 22) passes through an orifice in said second end of the mechanical connection, to be fastened [to] a rotary unit via said pitch hinge (16, 26).

6. A helicopter according to any one of Claims 2 to 5, **characterised in that**, said attachment zone (200) including the fastening means (11, 21) of the blade (10) and a section of this blade, said first end (EX1) is secured to said fastening means (11, 21).

7. A helicopter according to any one of Claims 2 to 5, **characterised in that**, said attachment zone (200) including the fastening means (11, 21) of the blade (10) and a section of this blade, said first end (EX1) is secured to said section.

8. A helicopter according to any one of Claims 2 to 7, **characterised in that** said mechanical connection (14, 24) is an angle iron.

9. A helicopter according to any one of Claims 2 to 7, **characterised in that** said mechanical connection (14) comprises an angle iron (15) which is articulated to an intermediate link (100), the first end (EX1) of the mechanical connection (14) corresponding to the first end zone (15') of the angle iron (15) which is not connected to the intermediate link (100), the second end (EX2) of the mechanical connection (100) being represented by the free end (100') of the intermediate link (100) which is not connected to the angle iron (15).

10. A helicopter according to any one of Claims 1 to 8, **characterised in that**, the blades (10, 20) being contained in a first plane (P1) when they are not flapping, the lift elements (12, 22) connected mechanically to said blades (10, 20) being contained in a second plane (P2) when they are not flapping, said first and second planes (P1, P2) coincide.

11. A helicopter according to any one of Claims 1 to 7, **characterised in that**, the blades (10, 20) being contained in a first plane (P1) when they are not flapping and the lift elements (12, 22) connected mechanically to said blades (10, 20) being contained in a second plane (P2) when they are not flapping, said first and second planes (P1, P2) are parallel to one another.

12. A helicopter according to any one of the preceding claims, **characterised in that** said rotor (1) comprises a stop means (30) for limiting the flapping of each lift element (12).

13. A helicopter according to Claim 12, **characterised in that** said stop means (30) is provided with an upper plate (31) which covers at least in part an upper part (3) of the hub (2) of the rotor (1), said upper part (3) being located on that side of the hub (2) which is at the opposite end from a fuselage of the helicopter.

14. A helicopter according to Claim 13, **characterised in that**, each lift element (12) being connected mechanically to a blade (10), said stop means (30) comprises one actuator (32) per lift element (12), each actuator (32) being arranged between said upper plate (31) and each lift element in order to limit the flapping of each lift element (12).

15. A helicopter according to Claim 13, **characterised in that** said stop means (30) is provided with a lower plate (33) which covers at least in part a lower part (4) of the hub (2) of the rotor (1), said lower part (4) being located on that side of the hub (2) which faces the fuselage of the helicopter.

16. A helicopter according to any one of the preceding claims, **characterised in that**, said main rotor (2) comprising a pitch control swashplate (50) provided with a rotary plate (51) and a non-rotary plate (52), each flap (19, 29) is connected to said rotary plate (51) by a main rod (40).

17. A helicopter according to any one of Claims I to 15, **characterised in that** said rotor (1) comprises at least one actuating element (70) per flap (19, 29) arranged on the associated lift element in order to adjust the tilt of the flap (19, 29) relative to the lift element to which it is fastened.

18. A helicopter according to Claim 15, **characterised in that** said actuating element (70) is powered electrically via an electrical collector (71) arranged on a rotary mast (5) of the rotor (2).

19. A helicopter according to Claim 17, **characterised in that** said actuating element (70) is powered electrically via an electric generator comprising a stator arranged within a rotary mast (5) of the rotor (2).

20. A helicopter according to any one of Claims 17 to 19, **characterised in that** said actuating element (70) is controlled by a wireless transmission means.

21. A helicopter according to any one of Claims 17 to 20, **characterised in that** said actuating element (70) is a piezoelectric actuating element which brings about an angular displacement.

22. A helicopter according to any one of the preceding claims, **characterised in that** each lift element (12, 22) is managed independently, functionally and mechanically, so as to vary individually the pitch of a single blade.

23. A method for varying the pitch of a blade of a helicopter rotor comprising at least two blades, **characterised in that**, a lift element (12, 22) provided with a flap (19, 29) being solely connected to said blade (10, 20), the lift generated by said lift element (12, 22) is adjusted by tilting the flap (19, 29) relative to the lift element so that this lift element (12, 22) flaps to drive in rotation the blade (10, 20) to which it is connected about a first longitudinal axis (13, 23) for varying the pitch of said blade (10, 20).
